# EUROPEAN PATENT SPECIFICATION

(11) **EP 3 840 428 B1**
(45) Date of publication and mention of the grant of the patent: **15.07.2026**
(21) Application number: 20212937.5
(22) Date of filing: 10.12.2020
(51) Int. Cl.: H04W 4/33, G06F 40/40

(54) **METHOD FOR IMPROVING THE TRAINING SESSION EXPERIENCE OF A USER ON AN EXERCISE MACHINE AND EXERCISE MACHINE IMPLEMENTING SUCH A METHOD**
VERFAHREN ZUR VERBESSERUNG DER AUSBILDUNGSSITZUNGSERFAHRUNG EINES BENUTZERS AN EINER ÜBUNGSMASCHINE UND EINER ÜBUNGSMASCHINE, DIE EINE SOLCHE VERFAHREN DURCHFÜHREN
PROCEDE POUR AMELIORER L'EXPERIENCE DE SESSION DE FORMATION D'UN UTILISATEUR SUR UNE MACHINE D'EXERCICE ET UNE MACHINE D'EXERCICE MISE EN OEUVRE D'UN TEL PROCEDE

(30) Priority: 18.12.2019 IT 201900024526
(43) Date of publication of application: 23.06.2021
(73) Proprietor: Technogym S.p.A., 47521 Cesena (FC) (IT)
(72) Inventor: GIUDICI, Fabrizio, I-47521 Cesena, FORLI' - CESENA (IT); CASALI, Luca, I-47521 Cesena, FORLI' - CESENA (IT)
(74) Representative: Mozzi, Matteo

(56) References cited:
- CN-A- 105 381 571
- US-B1- 10 025 776

## Description

### Field of the invention

The present invention relates to the field of fitness, and in particular, to a method for improving the training session experience of a user on an exercise machine and exercise machine implementing such a method, in greater detail, a method for enjoying a translation of a multimedia content in a set language on an exercise machine and exercise machine implementing such a method.

### Technological background of the invention

Nowadays, a user may enjoy audio and/or video multimedia contents during the training session on an exercise machine.

The audio and/or video multimedia contents may be simple entertainment or preparatory for the training session, such as for example audio messages or films explaining to the user how to carry out the training session on the exercise machine according to a set training program.

In this regard, a multimedia content may be a video of a personal trainer providing the user with both vocal messages for carrying out the training session according to a set training program (for example, how to vary the setting of the exercise machine) and other motivational messages and/or suggestions which help the user improve his/her training session performance.

Such multimedia content, provided on demand on request by the user or in real time, could be in a language not understood by the user, making the correct and timely understanding of the vocal messages provided by the personal trainer difficult, if not impossible.

Therefore, the need is strongly felt today to have available the most reliable and timely translation of a multimedia content in a language understood by the user, which may be enjoyed by the user on an exercise machine when carrying out a training session.

US 10,025,776 B1 discloses a language translation mediation system.

### Summary

The invention is defined by the claims.

It is the object of the present invention to devise and provide a method for improving the training session experience of a user on an exercise machine, in particular a method for enjoying a translation of a multimedia content in a set language on an exercise machine which allows the above drawbacks with reference to the known art to be at least partially obviated, in particular which allows to enjoy a translation of the multimedia content in the most reliable and timely manner.

Such an object is achieved by a method according to claim 1.

Preferred embodiments of said method are defined in the dependent claims.

The present invention also relates to an exercise machine implementing such a method.

### Brief description of the drawings

Further features and advantages of the method and such an exercise machine according to the invention will become apparent from the following description which discloses preferred embodiments, given by way of indicative, non-limiting examples, with reference to the accompanying drawings, in which:
- Figures 1a, 1b, 1c, 1d and 1e show examples of an exercise machine which can be employed by a user to carry out physical activity;
- Figure 2 shows, by means of a block diagram, an exercise machine according to an embodiment of the present invention;
- Figure 3 shows, by means of a block diagram, a data communication system, with present the exercise machine of Figure 2 adapted to implement the method according to the present invention, and
- Figure 4 shows, by means of a block diagram, a method for enjoying a translation of a multimedia content in a set language on an exercise machine, according to the embodiment of the present invention.

It should be noted that in the aforesaid Figures, equal or similar elements are indicated by the same numeric or alphanumeric reference.

### Detailed description

With reference to the aforesaid Figures, an exercise machine 100 according to the present invention is now described, which may be used by a user for carrying out physical activity.

The exercise machine 100 may be any exercise machine which can be employed by a user to carry out remote physical activity (e.g. from home), alone or in a training class, or to carry out physical activity at a gym, alone or in a training session class.

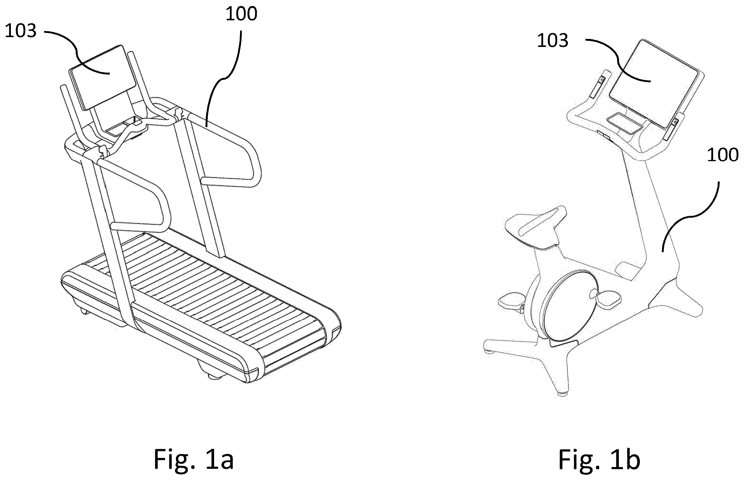

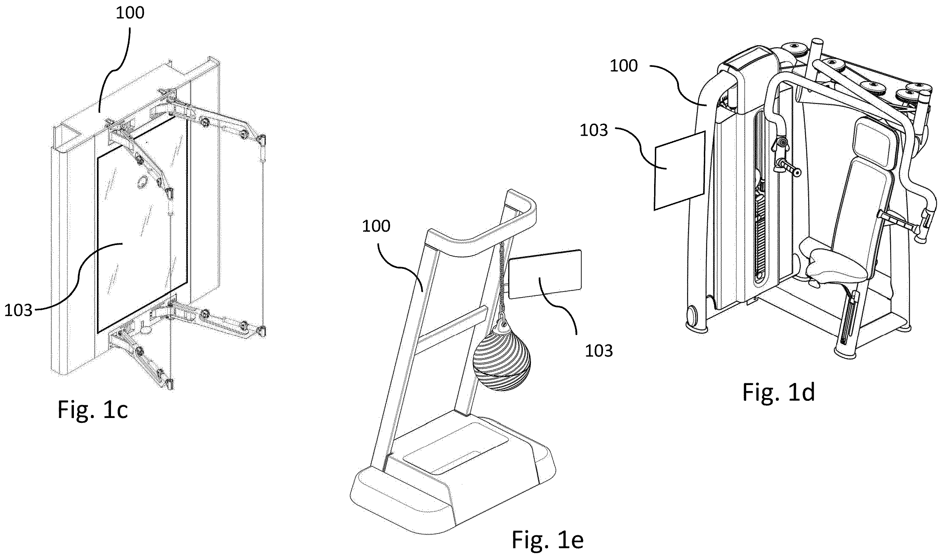

Examples of exercise machine 100 are a treadmill (Figure 1a), a bike or an exercise bike (Figure 1b), a rowing machine, an indoor cycling machine, a strength exercise equipment (Figures 1c and 1d) and a boxing equipment (Figure 1e), and so on.

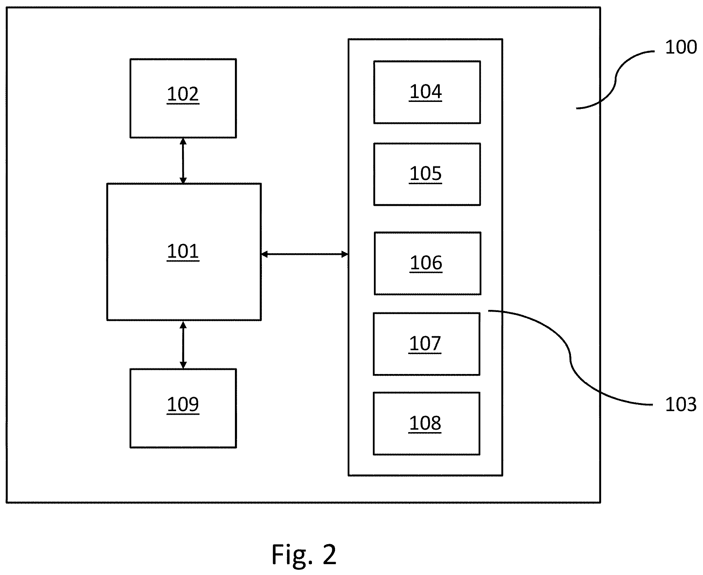

The following description, particularly with reference to Figure 2, is valid for any exercise machine 100 shown in Figure 1a, 1b and 1c.

The exercise machine 100 comprises a data processing unit 101, e.g. a microcontroller or microprocessor.

The exercise machine 100 further comprises a local storage unit 102 operatively connected to the respective data processing unit 101.

The local storage unit 102 may be internal or external (such as shown in Figure 2, for example) with respect to the data processing unit 101.

It is worth noting that the local storage unit 102 is configured to store one or more program codes which can be executed by the data processing unit 101 and the data generated and processed upon the execution of said one or more program codes.

The data processing unit 101 is configured to control the operation of the exercise machine 100.

Moreover, the data processing unit 101 is configured to carry out a method for enjoying, on an exercise machine, a translation of a multimedia content in a set language, according to the present invention, as described later.

The multimedia content, described in greater detail later, is indicated in the Figures by alphanumeric reference CM.

It is worth noting that the functions of the exercise machine 100, in particular the implementation of such a method, are described later.

Returning to Figure 2, the exercise machine 100 further comprises a user interface 103 operatively connected to the data processing unit 101, configured to allow a user to interact with the exercise machine 100.

Moreover, the user interface 103 is configured to allow the user to enjoy multimedia contents when carrying out the physical activity.

A multimedia content may be simple entertainment (for example surfing the Internet, entertaining videos, music audio/video files, and so on) or preparatory for the training session such as, for example, audio messages and/or films explaining to the user how to use the exercise machine and/or carry out the training session on the exercise machine according to a set training program.

In this regard, a multimedia content may be an audio and/or video of a personal trainer providing the user with both vocal messages for carrying out the training session according to a set training program (for example, how to vary the setting of the exercise machine) and other motivational messages and/or suggestions which help the user correctly carry out the training session and improve his/her performance.

These vocal messages are received by the user also with the support of video images if the multimedia content is both audio and video multimedia content.

Such multimedia content may be an audio video of a personal trainer to be enjoyed by the user remotely (e.g. from home) in order to carry out physical activity alone or in a training class.

If the multimedia content can be enjoyed by the user in a gym in order to carry out physical activity alone or in a training class of the gym, the multimedia content may also be an audio of the personal trainer only because the personal trainer is physically present in the gym or training class.

Such multimedia content (audio and/or video of the personal trainer) may be provided on demand on request by the user if the video was recorded beforehand, or in real time if the video is recorded in direct transmission during the training session.

The personal trainer may obviously be in any location with respect to the location of the exercise machine configured to request the enjoyment of the multimedia content during the training session of the user on that exercise machine.

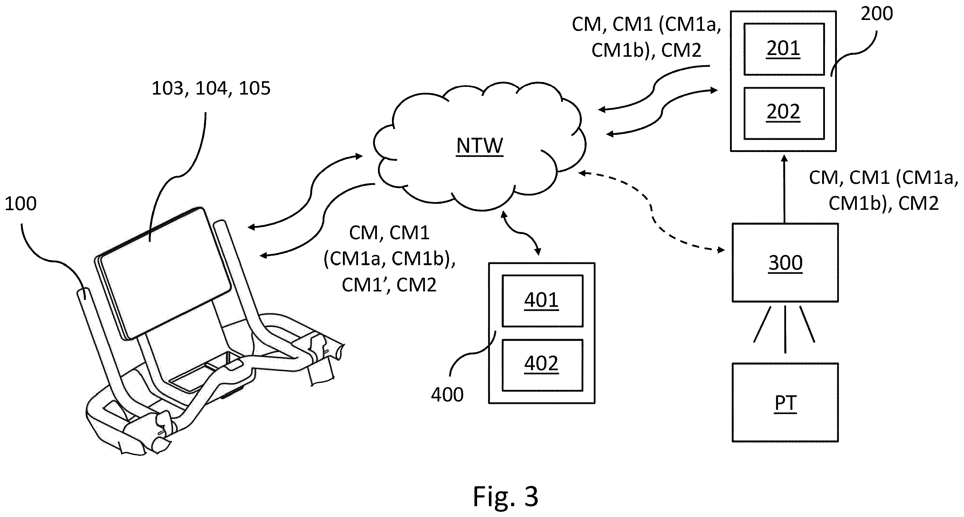

Therefore, the multimedia content CM (audio and/or video) may comprise at least one audio component CM1 or at least one video component CM2 (Figure 3) in combination with the at least one audio component CM1.

The at least one audio component CM1 preferably is the voice of a personal trainer.

It is worth noting that the at least one audio component CM1 and the at least one video component CM2 are synchronized with each other, as is also noted later.

In a particular case, also described later, the at least one audio component CM1 may comprise a first sub-component CM1a representative of the personal trainer's voice and a second audio sub-component CM1b representative of a background music (only instrumental or also with vocal part).

Returning to Figure 2, according to an embodiment, in combination with any one of those described above, the user interface 103 comprises a command module 104 configured to allow the user to impart commands to the exercise machine 100.

In an embodiment, the command module 104 may be of the touchscreen type.

In another embodiment, alternative to the preceding one, the command module 104 may be a push-button keyboard.

The user interface 103 further comprises a display module 105.

The display module 105 can be employed by the user to interact with the user interface 103 during employment of the exercise machine 100 to carry out the physical activity.

In greater detail, the display module 105 is configured to show, to the user, multimedia contents, already described above, also including the multimedia content representative of a video of a personal trainer which is preparatory for carrying out the physical activity of the user on the exercise machine 100.

Moreover, the display module 105 is configured to show contents to the user representative of the employment of the exercise machine 100, among which, for example, initial menu screen for setting the training session, training session parameters updated during the training session, training session summary screen, and so on.

In an embodiment, the display module 105 coincides with the command module 104 if the command module 104 is of the touchscreen type.

In another embodiment, the display module 105 is separate from the command module 104 if the command module 104 is a push-button keyboard.

According to one embodiment, in combination with any one of those described above, the user interface 103 is configured to allow a user to enjoy an audio signal.

Such an audio signal is the at least one audio component of a multimedia content (whether it is an audio only of the personal trainer or also a video of the personal trainer) which may be enjoyed by the user when carrying out the physical activity on the exercise machine 100.

In an embodiment, in combination with the preceding one, the user interface 103 comprises an audio broadcasting module 106, for example at least one speaker, operatively connected to the data processing unit 101.

In this regard, the user interface 103 is configured to allow a user to enjoy an audio signal by means of the audio broadcasting module 106.

According to one embodiment, in combination with any one of those described above, the user interface 103 is configured to allow a user to enjoy an audio signal by means of an earphone.

In an embodiment, in combination with the preceding one, the user interface 103 comprises a connection jack 107, for example a female jack or other equivalent, configured to allow the wired connection of a user's earphone to the user interface 103.

In an embodiment, in combination with or alternatively to the preceding one, the user interface 103 comprises a data communication module 108 configured to allow the wireless connection of a user's earphone to the user interface 103, for example by means of the communication channel in Bluetooth, NFC, Wi-Fi mode or other equivalent technology.

According to one embodiment, in combination with any one of those described above, the exercise machine 100 further comprises a data communication interface 109 operatively connected to the data processing unit 101, configured to allow the exercise machine 100 to transmit and receive data through a data communication network NTW (diagrammatically shown in Figure 3), e.g. the Internet, to which the exercise machine 100 is operatively connected.

The connection of the exercise machine 100 to the data communication network NTW may be in wired mode or in wireless mode.

Returning to the exercise machine 100, according to an embodiment, the data processing unit 101 of the exercise machine 100 is configured to receive a multimedia content CM comprising at least one audio component in a first language CM1 (Figure 3).

In this regard, the multimedia content CM may be selected by the user through the user interface 103 of the exercise machine 100.

As mentioned above, the multimedia content CM may be an audio and/or video of a personal trainer in which the at least one audio component CM1 is the personal trainer's voice which provides preparatory messages for carrying out the physical activity of a user.

The first language of the at least one audio component CM1 of the multimedia content CM is a language selected by the personal trainer, for example the mother tongue or another language.

The reception of such multimedia content may occur by means of the data communication interface 109 of the exercise machine 100 and the data communication network NTW to which such a data communication interface 109 is operatively connected.

The multimedia content (audio and/or video of a personal trainer) are transmitted to the exercise machine 100 by a remote electronic apparatus 200 (for example, a computer, diagrammatically shown in Figure 3) operatively connected to the exercise machine 100 by means of the data communication network NTW.

The remote electronic apparatus 200 comprises a respective data processing module 201, for example a microcontroller or microprocessor.

The remote electronic apparatus 200 further comprises a respective storage module 202 operatively connected to the respective data processing module 201.

The storage module 202 may be internal or external (such as shown in Figure 3, for example) with respect to the data processing module 201.

It is worth noting that the storage module 202 is configured to store one or more program codes which can be executed by the data processing module 201 and the data generated and processed upon the execution of said one or more program codes by the data processing module 201.

The remote electronic apparatus 200 may be proprietary or of third parties.

Returning in general to Figure 2, the transmission of the multimedia content occurs following a request to receive such multimedia content carried out by the data processing unit 101 of the exercise machine 100.

Such a request is the consequence of a command imparted by the user to perform physical activity on the exercise machine 100 while following a set training program with the enjoyment of the multimedia content to follow the instructions of the personal trainer remotely (e.g. from home) or at the gym, alone or within a training class.

It is worth noting that the preparatory multimedia content (audio/video of a personal trainer) for providing support to the user during the performance of physical activity on an exercise machine are, for example, acquired by means of an electronic device 300 for acquiring a multimedia content (diagrammatically shown in Figure 3) placed at a personal trainer PT (also diagrammatically shown in Figure 3) adapted to perform the same training session on an exercise machine of the same type.

The electronic device 300 for acquiring a multimedia content may be, for example, an audio recording device (microphone) or an audio and video recording device (camera).

The personal trainer PT may perform a lesson in a training class in a gym and at the same time be recorded and/or filmed by the electronic device 300 for acquiring a multimedia content so that the multimedia content may be made available to the remote electronic apparatus 200 for sharing on the data communication network NTW.

In an embodiment, the electronic device 300 for acquiring a multimedia content may be configured to acquire, possibly separately, at least one audio component CM1 and at least one video component CM2.

The electronic device 300 for acquiring a multimedia content is configured (in hardware and/or software) to possibly code and/or compress the at least one audio component CM1 and the at least one video component CM2 prior to the transmission on the data communication network NTW.

In an embodiment, combined with the preceding one, the electronic device 300 for acquiring a multimedia content is configured to generate the multimedia content CM to be transmitted on the data communication network NTW by carrying out the possible multiplexing between the at least one audio component CM1 and the at least one video component CM2.

According to one embodiment, the electronic device 300 for acquiring a multimedia content is configured to transmit the at least one audio component CM1 and the at least one video component CM2 on the data communication network NTW.

In this case, the generation of the multimedia content CM to be transmitted on the data communication network NTW while carrying out the possible multiplexing between the at least one audio component CM1 and the at least one video component CM2 is transferred to the remote electronic apparatus 200 or directly to the exercise machine 100.

In the particular case in which the at least one audio component CM1 comprises a first sub-component CM1a representative of the personal trainer's voice and a second audio sub-component CM1b representative of a background music, the electronic device 300 is configured to acquire the first audio sub-component CM1a (personal trainer's voice) and the second audio sub-component CM1b (background music) of the at least one audio component CM1 and the at least one video component CM2.

If the second audio sub-component CM1b has also a vocal part, once the first audio sub-component CM1a and the second audio sub-component CM1b of the at least one audio component CM1 have been acquired, the electronic device 300 is configured to carry out, on the components CM1a, CM1b and CM2, the other possible above-described coding and/or compressing and multiplexing operations to transmit the respective multimedia content CM on the data communication network NTW.

In an embodiment, prior to the transmission of the multimedia content CM on the data communication network NTW, the multiplexing part of the components CM1a, CM1b and CM2 may be transferred to the remote electronic apparatus 200.

In an embodiment, the electronic device 300 for acquiring a multimedia content may be operatively directly connected to the remote electronic apparatus 200, as shown, for example in Figure 2.

In another embodiment, not shown in the Figures, in combination with or alternatively to the preceding one, the electronic device 300 for acquiring a multimedia content may be operatively connected to the remote electronic apparatus 200 by means of the data communication network NTW.

In a further embodiment, shown with dashed lines in Figure 3, in combination with or alternatively to the preceding one, the electronic device 300 for acquiring a multimedia content may be operatively connected to the exercise machine 100 by means of the data communication network NTW.

Returning to the exercise machine 100 in Figures 2 and 3, in an embodiment, in combination with any one of those described above, the data processing unit 101 is configured to receive the multimedia content CM in real time.

It is worth noting that in this embodiment, the method for enjoying, on an exercise machine, a translation of a multimedia content in a set language, according to the present invention and described later, can be carried out by the data processing unit 101 of the exercise machine 100 in real time.

It is worth noting that in an embodiment, the exercise machine 100 may receive the multimedia content CM, by means of the data communication network NTW, from the remote electronic apparatus 200, or in another embodiment, the exercise machine 100 may receive the multimedia content CM, by means of the data communication network NTW, directly from the electronic device 300 for acquiring a multimedia content.

According to a further embodiment, in combination with any one of those described above, the data processing unit 101 is configured to receive the multimedia content CM on demand upon a request by the user.

Such a request may be entered by the user by means of the command module 104 of the user interface 103 of the exercise machine 100.

It is worth noting that in this embodiment, the method for enjoying, on an exercise machine, a translation of a multimedia content in a set language, according to the present invention and described later, can be carried out by the data processing unit 101 of the exercise machine 100 on demand.

In this regard, the multimedia content CM may have been acquired previously by the electronic device 300 for acquiring a multimedia content and stored on the storage module 202 of the electronic apparatus 200, configured here to make the stored multimedia content CM available on demand.

Returning to the exercise machine 100 in Figures 2 and 3, in an embodiment, in combination with any one of those described above, once the multimedia content CM has been received, the data processing unit 101 of the exercise machine 100 is configured to obtain a translation CM1' of the at least one audio component CM1 of the multimedia content CM in a set second language.

In an embodiment, if the translation CM1' of the at least one audio component CM1 of the multimedia content CM in a set second language is available on the storage unit operatively connected to the data processing unit 101 of the exercise machine 100, the data processing unit 101 is configured to employ the translation CM1' of the at least one audio component CM1 in the set second language available in such a storage unit as translation CM1' of the at least one audio component CM1 of the multimedia content CM in a set second language.

In an embodiment, if the translation CM1' of the at least one audio component in a set second language is not available in a storage unit operatively connected to the data processing unit 101 of the exercise machine 100, the data processing unit 101 is configured to carry out translation CM1' of the at least one audio component CM1 of the multimedia content CM in the set second language.

In this embodiment, the data processing unit 101 is configured to store the translation CM1' of the at least one audio component CM1 of the multimedia content CM in a set second language in such a storage unit.

Thereby, such a storage unit may advantageously be populated with the translations already obtained so as to be able to reuse them with a subsequent saving of time at a computational level.

In an embodiment, in combination with any one of those described above, the data processing unit 101 of the exercise machine 100 is configured to verify whether the translation CM1' of the at least one audio component in a set second language is available or not in a storage unit operatively connected to the data processing unit 101 of the exercise machine 101.

In an embodiment, in combination with any one of those described above, the storage unit operatively connected to the data processing unit 101 of the exercise machine 100 in which the data processing unit 101 may verify whether the translation CM1' of the at least one audio component CM1 of the multimedia content CM in the set second language is available or not is the local storage unit 102 of the exercise machine 100.

In an embodiment, alternatively to the preceding one, the storage unit operatively connected to the data processing unit 101 of the exercise machine 100 in which the data processing unit 101 may carry out the verification of whether the translation CM1' of the at least one audio component CM1 of the multimedia content CM in the set second language is available or not is a storage module of a remote computer operatively connected to the exercise machine 100 by means of the data communication network NTW.

In an embodiment, the remote computer is the remote electronic apparatus 200 adapted to transmit, to the exercise machine 100, the multimedia content CM (audio and/or video of a personal trainer) comprising, as mentioned above, a respective data processing module 201 and a respective storage module 202.

In a further embodiment, the remote computer is a further remote electronic apparatus 400 (diagrammatically shown in Figure 3).

The further remote electronic apparatus 400 comprises a respective data processing module 401, for example a microcontroller or microprocessor.

The further remote electronic apparatus 400 further comprises a respective storage module 402 operatively connected to the respective data processing module 401.

The storage module 402 may be internal or external (such as shown in Figure 3, for example) with respect to the data processing module 401.

The storage module 402 is configured to store one or more program codes which can be executed by the data processing module 201 and the data generated and processed upon the execution of said one or more program codes by the data processing module 402.

The further remote electronic apparatus 400 operatively connected to the exercise machine 100 by means of the data communication network NTW is separate from the remote electronic apparatus 200.

The further remote electronic apparatus 400 may be proprietary or of third parties.

The storage unit described according to the various embodiments is also the one populated with the translations obtained each time during the use of the exercise machine 100 for enjoying preparatory multimedia contents for carrying out the physical activity by a user.

According to one embodiment, in combination with any one of those described above, the data processing unit 101 of the exercise machine 100 is configured to carry out the translation CM1' of the at least one audio component CM1' of the multimedia content CM in the set second language.

According to a further embodiment, alternatively to the preceding one, the data processing unit 101 of the exercise machine 100 is configured to transfer the translation CM1' of the at least one audio component CM1 of the multimedia content CM in the set second language to a data processing module of a remote computer operatively connected to the exercise machine 100 by means of the data communication network NTW.

The remote computer here is configured to carry out the translation CM1' of the at least one audio component CM1 of the multimedia content CM in the set second language, received by the data processing unit 101 of the exercise machine 100.

In this regard, both in the embodiment in which the data processing unit 101 of the exercise machine 100 is to carry out the translation CM1' and in the embodiment in which it is the remote computer to carry out the translation CM1', the translation CM1' of the at least one audio component CM1 of the multimedia content CM in the set second language may be carried out by employing specific translation software or APPs (vocal translators with speech-to-text engines based on the employment of machine learning or artificial intelligence), which in themselves are known, which are capable of returning the translation both in audio format and in text format.

In greater detail, the at least one audio component CM1 is transformed into a corresponding text message which is translated in the set second language and possibly in turn transformed into an audio component.

It is worth noting, according to an embodiment, the remote computer is the remote electronic apparatus 200 adapted to transmit, to the exercise machine 100, the multimedia content CM (audio and/or video of a personal trainer) comprising, as mentioned above, a respective data processing module 201.

According to one embodiment, the remote computer is the further remote electronic apparatus 400 comprising, as mentioned above, a respective data processing module 401 and a respective storage module 402.

According to one embodiment, in combination with any one of those described above, the data processing unit 101 of the exercise machine 100 is configured to extrapolate the at least one audio content CM1 from said received multimedia content CM in order to carry out the translation of the at least one audio component CM1 in a set second language.

As mentioned above, the multimedia content CM comprises the at least one audio component CM1 and the at least one video component CM2, which are possibly coded and/or compressed and multiplexed with each other prior to the transmission on the data communication network NTW.

The data processing unit 101 of the exercise machine 100 therefore is configured to carry out the possible decoding and/or decompressing and separating (for example, demultiplexing) between the at least one audio component CM1 and the at least one video component CM2, and possibly the decoding and/or decompression to make them available to the broadcasting module 106 and the display module 105, respectively, of the user interface 103 of the exercise machine 100.

Returning in general to the exercise machine 100 in the Figures, the data processing unit 101 of the exercise machine 100 is configured to provide the multimedia content CM with the associated translation CM1' in the set second language of the at least one audio component CM1 of the multimedia content CM by means of the user interface 103 operatively connected to the data processing unit 101.

In particular, in this embodiment, the data processing unit 101 of the exercise machine 100 is configured to provide the user with the multimedia content CM with the associated translation CM1' in the set second language of the at least one audio component CM1 of the multimedia content CM by broadcasting the at least one audio component CM1 of the multimedia content CM in audio mode.

In an embodiment, in combination with the preceding one, the data processing unit 101 of the exercise machine 100 is configured to broadcast the at least one audio component CM1 in audio mode as translation CM1' in the set second language.

According to one embodiment, in combination with the preceding one, the data processing unit 101 of the exercise machine 100 is configured to transform the translation CM1' in the set second language of the at least one audio component CM1 of the multimedia content CM, into one or more text messages.

According to one embodiment, in combination with the preceding one, the data processing unit 101 of the exercise machine 100 is configured to:
- transform the at least one audio component CM1 of the multimedia content CM in the first language into one or more text messages;
- translate said one or more text messages in the first language into said set second language.

According to a further embodiment, in combination with or alternatively to the preceding one, the data processing unit 101 of the exercise machine 100 is configured to transform said one or more text messages in the set second language into a respective audio component.

As mentioned above, the translation may be directly carried out by the data processing unit 101 of the exercise machine 100 or transferred from the data processing unit 101 of the exercise machine 100 to a data processing module of a remote computer (remote electronic apparatus 200 or further remote electronic apparatus 400).

Moreover, according to any one of the embodiments described above, the data processing unit 101 of the exercise machine 100 is configured to display said one or more text messages in the set second language on a display module 105 of the user interface 103 of the exercise machine 100 in the form of text messages or in the form of subtitles of the multimedia content CM, if the latter have a video component CM2 (video of the personal trainer PT).

Therefore according to these embodiments, the data processing unit 101 of the exercise machine 100 is configured to broadcast the at least one audio component CM1 in the set second language in audio mode and/or to display one or more text messages in the set second language in the form of text messages or in the form of subtitles of the multimedia content CM, if the latter have a video component CM2 (video of the personal trainer PT).

In an embodiment, alternatively to the preceding one, the data processing unit 101 of the exercise machine 100 is configured to broadcast the at least one audio component CM1 in audio mode in the first language.

Moreover, in this embodiment, the data processing unit 101 of the exercise machine 100 is configured to transform the translation CM1' in the set second language of the at least one audio component CM1 of the multimedia content CM, into one or more text messages.

According to one embodiment, in combination with the preceding one, the data processing unit 101 of the exercise machine 100 is configured to:
- transform the at least one audio component CM1 of the multimedia content CM in the first language into one or more text messages;
- translate said one or more text messages in the first language into said set second language.

According to a further embodiment, in combination with or alternatively to the preceding one, the data processing unit 101 of the exercise machine 100 is configured to transform said one or more text messages in the set second language into a respective audio component.

Also in this case, as mentioned above, the translation may be directly carried out by the data processing unit 101 of the exercise machine 100 or transferred from the data processing unit 101 of the exercise machine 100 to a data processing module of a remote computer (remote electronic apparatus 200 or further remote electronic apparatus 400).

Moreover, in this embodiment, the data processing unit 101 of the exercise machine 100 is configured to display said one or more text messages on a display module 105 of the user interface 103 of the exercise machine 100 in the form of text messages or in the form of subtitles of the multimedia content CM, if the latter have a video component CM2 (video of the personal trainer PT).

Therefore, according to these embodiments, the data processing unit 101 of the exercise machine 100 is configured to broadcast the at least one audio component CM1 in audio mode in the first language and/or to display one or more text messages in the set second language in the form of text messages or in the form of subtitles of the multimedia content CM, if the latter is a video.

According to one embodiment, the broadcasting of the at least one audio component CM1 of the multimedia content CM in audio mode may occur by means of the audio broadcasting module 106 (e.g. a speaker) operatively connected to the data processing unit 101 of the exercise machine 100.

According to one embodiment, in combination with or alternatively to the preceding one, the broadcasting of the at least one audio component CM1 of the multimedia content CM in audio mode may occur by means of a user's earphone operatively connected to the user interface 103 of the exercise machine 100 in wired mode, for example by means of inserting the user interface 103 into the connection jack 107, or in wireless mode, for example by means of a communication channel in Bluetooth, NFC, Wi-Fi mode, or other equivalent technology.

According to one embodiment, in combination with any one of the embodiments described above, the data processing unit 101 of the exercise machine 100 is further configured to determine the set second language associated with the user adapted to carry out a training session on the exercise machine 100.

According to one embodiment, in combination with the preceding one, the data processing unit 101 of the exercise machine 100 is configured to automatically select the set second language according to set user requirements.

In an embodiment, the set second language can be determined by the information representative of the user, loaded for example in the exercise machine 100 upon the user authentication, such as for example, preferred credentials, set user training program, and so on.

For example, if the exercise machine 100 is for physical activity at home, the set second language which can be determined is the preferred language set in the exercise machine 100.

In the event instead of an exercise machine 100 for physical activity at a gym, the set second language which can be determined is the language of the user account authenticated on the exercise machine 100.

In an embodiment, the set second language can be determined according to the location of the exercise machine 100 employed by the user to carry out the physical activity.

The information representative of the location can be determined by the data processing unit 101 of the exercise machine 100 by the information representative of the position of the exercise machine 100 which may be provided by a locating device (GPS or other, not shown in the Figures) of the exercise machine 100 or may be provided by sales data of the exercise machine 100 itself stored in a dedicated manufacturer's database.

According to an embodiment, alternatively to the preceding ones, the data processing unit 101 of the exercise machine 100 is configured to determine the set second language upon a manual request by the user.

In this embodiment, the set second language may be manually selected by the user by means of the command module 104 of the user interface 103.

For example, the display module 105 of the user interface 103 may show the user a menu with the available selections for the set second language.

According to one embodiment, in combination with any one of the embodiments described above, the data processing unit 101 of the exercise machine 100 is further configured to determine in which language, between the first language and a plurality of second languages, also comprising the set second language, the at least one audio component CM1 of the multimedia content is to be broadcasted.

The data processing unit 101 of the exercise machine 100 is configured to carry out such a determination upon a manual request by the user, imparted for example by means of a selection menu which can be displayed on the display module 105 of the user interface 103 of the exercise machine 100.

In an embodiment, the data processing unit 101 of the exercise machine 100 is likewise configured to allow the user to change the set second language during the carrying out of the training session, for example by means of the selection menu which can be displayed on the display module 105 of the user interface 103 of the exercise machine 100.

Moreover, in an embodiment, in combination with the preceding one, the data processing unit 101 of the exercise machine 100 is configured to allow the user the possibility of displaying said one or more text messages in the set second language on a display module of the user interface of the exercise machine in the form of text messages or in the form of subtitles of the multimedia content CM, if the latter has a video component CM2 (video of a personal trainer).

The data processing unit 101 of the exercise machine 100 is configured to carry out such a determination upon a manual request by the user, imparted for example by means of a selection menu which can be displayed on the display module 105 of the user interface 103 of the exercise machine 100.

As mentioned above, the at least one audio component CM1 may comprise a first sub-component CM1a representative of the personal trainer's voice and a second audio sub-component CM1b representative of a background music.

If the second audio sub-component CM1b is representative of a instrumental only background music (i.e. performed exclusively by means of the employment of musical instruments, without the use of a vocal part), the translation of the at least one audio component CM1 in the set second language is carried out without any interference problem.

Indeed, the personal trainer's voice is the only vocal audio source (i.e. "spoken"), therefore easily recognized and translated into a corresponding text message.

If instead the second audio sub-component CM1b is representative of a background music comprising both the instrumental part and the vocal part, the electronic device 300 for acquiring a multimedia content is configured to acquire and manage the first audio sub-component CM1a (personal trainer's voice) and the second audio sub-component CM1b (background music, here with vocal part).

In reception step, in addition to being configured to carry out the possible decoding and/or decompressing and separating (for example, demultiplexing) between the received components, the data processing unit 101 of the exercise machine 100 is also configured to associate the personal trainer's voice with a first audio channel and the background music with the vocal part with a second audio channel, separate from the first audio channel.

Thereby, the problem may be resolved of interference due to the possible overlapping between the personal trainer's voice and the vocal part in the background music which could complicate creating the text message corresponding to the personal trainer's voice, which could be a combination of what the personal trainer is saying and what is sung or spoken in the background music.

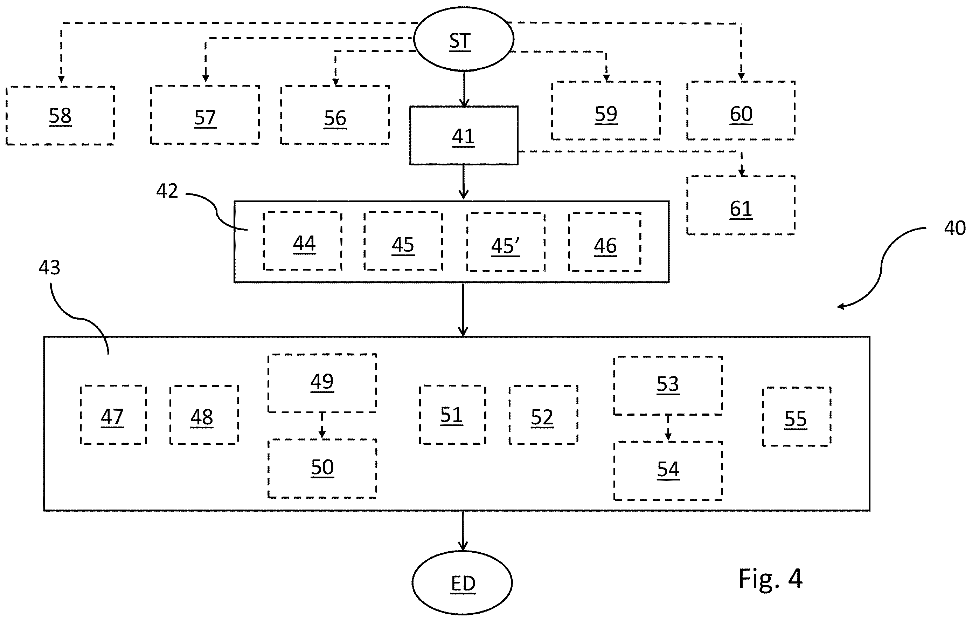

With reference to Figure 4, a method 40 for enjoying, on an exercise machine 100, a translation of a multimedia content CM in a set language, later also method 40 for enjoying or simply method 40, is described according to an embodiment of the present invention.

The exercise machine 100 was described above according to different embodiments.

The method 40 comprises a symbolic step of starting ST.

The method 40 further comprises a step of receiving 41, by a data processing unit 101 of an exercise machine 100, a multimedia content CM comprising at least one audio component CM1 in a first language.

Examples of multimedia contents were described above.

In this regard, the multimedia content CM may be an audio and/or video of a personal trainer, which was defined in detail above.

The method 40 further comprises a step of obtaining 42, by the data processing unit 101 of the exercise machine 100, a translation CM1' of the at least one audio component CM1 in a set second language.

The method 40 further comprises a step of providing 43 the user, by the data processing unit 101 of the exercise machine 100, by means of a user interface 103 operatively connected to the data processing unit 101 of the exercise machine 100, with the multimedia content CM with the associated translation CM1' in the set second language of the at least one audio component CM1.

The user interface 103 of the exercise machine 100 was described above.

The method 40 concludes with a symbolic step of ending ED.

According to one embodiment, shown with dashed lines in Figure 4, if the translation of the at least one audio component CM1 in a set second language is available on a storage unit operatively connected to the data processing unit 101 of the exercise machine 100, the step of obtaining 42 comprises a step of using 44, by the data processing unit 101 of the exercise machine 100, the translation of the at least one audio component CM1 in the set second language available on the storage unit as a translation CM1' of the at least one audio component CM1 in a set second language.

According to this embodiment, if the translation CM1' of the at least one audio component CM1 in a set second language is not available on the storage unit operatively connected to the data processing unit 101 of the exercise machine 100, the step of obtaining 42 comprises a step of carrying out 45, by the data processing unit 101 of the exercise machine 100, the translation CM1' of the at least one audio component CM1 in the set second language.

In this embodiment, the method 40 further comprises a step of storing 45' the translation CM1' of the at least one audio component CM1 of the multimedia content CM in a set second language in the storage unit operatively connected to the data processing unit 101 of the exercise machine 100.

Thereby, such a storage unit may advantageously be populated with the translations already obtained so as to be able to reuse them with a subsequent saving of time at a computational level.

According to various embodiments already described above, such a storage unit which can be populated with the translations already obtained, may be the local storage unit 102 of the exercise machine 100 or the storage module of a remote computer operatively connected to the exercise machine 100 by means of the data communication network NTW, for example the storage module 202 of the remote electronic apparatus 200 or the storage module 402 of the further remote electronic apparatus 400.

In an embodiment, in combination with any one of those described above, the data processing unit 101 of the exercise machine 100 is configured to verify whether the translation CM1' of the at least one audio component in a set second language is available or not in a storage unit operatively connected to the data processing unit 101 of the exercise machine 101.

According to one embodiment, in combination with the preceding ones, the storage unit operatively connected to the data processing unit 101 of the exercise machine 100 is a local storage unit 102 of the exercise machine 100.

In an embodiment, alternatively to the preceding one, the storage unit operatively connected to the data processing unit 101 of the exercise machine 100 is a storage module of a remote computer operatively connected to the exercise machine 100 by means of a data communication network NTW.

In an embodiment, the remote computer is a remote electronic apparatus 200 adapted to transmit to the exercise machine 100 the multimedia content CM (audio and/or video of a personal trainer) comprising, as mentioned above, a respective data processing module 201 and a respective storage module 202.

In a further embodiment, the remote computer is a further remote electronic apparatus 400 (diagrammatically shown in Figure 3) comprising, as mentioned above, a respective data processing module 401 and a respective storage module 402.

According to one embodiment, the step of carrying out 45, by the data processing unit 101 of the exercise machine 100, the translation CM1' of the at least one audio component CM1 in the set second language is carried out by the data processing unit 101 of the exercise machine 100 by means of the data communication network NTW.

According to a further embodiment, alternatively to the preceding one, the step of carrying out 45, by the data processing unit 101 of the exercise machine 100, the translation CM1' of the at least one audio component CM1 in the set second language is transferred to a data processing module of a remote computer operatively connected to the exercise machine 100.

Examples of translation modes were described above.

It is worth noting, according to an embodiment, the remote computer is the remote electronic apparatus 200 adapted to transmit, to the exercise machine 100, the multimedia content CM (audio and/or video of a personal trainer) comprising, as mentioned above, a respective data processing module 201.

According to one embodiment, the remote computer is the further remote electronic apparatus 400 comprising, as mentioned above, a respective data processing module 401 and a respective storage module 402.

According to one embodiment, in combination with any one of those described above, shown with dashed lines in Figure 4, the step of obtaining 42, by the data processing unit 101 of the exercise machine 100, the translation CM1' of the at least one audio component CM1 in a set second language comprises a step of extrapolating 46, by the data processing unit 101 of the exercise machine 100, the at least one audio content CM1 from said received multimedia content CM.

As mentioned above, the multimedia content CM comprises the at least one audio component CM1 and the at least one video component CM2, which are possibly coded and/or compressed and multiplexed with each other prior to the transmission on the data communication network NTW.

In the step of extrapolating 46, the data processing unit 101 of the exercise machine 100 carries out the possible decoding and/or decompressing and separating (for example, demultiplexing) between the at least one audio component CM1 and the at least one video component CM2 and decodes them to make them available to the broadcasting module 106 and the display module 105, respectively, of the user interface 103 of the exercise machine 100.

According to one embodiment, in combination with any one of those described above, shown with dashed lines in Figure 4, the step of providing 43 the user with the multimedia content CM with the associated translation CM1' in the set second language of the at least one audio component CM1 comprises a step of broadcasting 47 the at least one audio component CM1 of the multimedia content CM1 in audio mode.

According to one embodiment, in combination with the preceding one, the at least one audio component CM1 is broadcasted in audio mode as translation CM1' in the set second language.

According to one embodiment, in combination with the preceding one, shown with dashed lines in Figure 4, the step of providing 43 the user with the multimedia content CM with the associated translation CM1' in the set second language of the at least one audio component CM1 comprises a step of transforming 48 the translation CM1' in the set second language of the at least one audio component CM1 of the multimedia content CM into one or more text messages.

According to a further embodiment, alternatively to the preceding ones, shown with dashed lines in Figure 4, the step of providing 43 the user with the multimedia content CM with the associated translation CM1' in the set second language of the at least one audio component CM1 comprises steps of:
- transforming 49, by the data processing unit 101 of the exercise machine 100, the at least one audio component CM1 in the set second language into one or more text messages;
- translating 50, by the data processing unit 101 of the exercise machine 100, said one or more text messages in the first language into said set second language.

Also in this case, as mentioned above, the translation may be directly carried out by the data processing unit 101 of the exercise machine 100 or transferred from the data processing unit 101 of the exercise machine 100 to a data processing module of a remote computer (remote electronic apparatus 200 or further remote electronic apparatus 400).

Moreover, according to any one of the embodiments described above, shown with dashed lines in Figure 4, the step of providing 43 the user with the multimedia content CM with the associated translation CM1' in the set second language of the at least one audio component CM1 comprises a step of displaying 51, by the data processing unit 101 of the exercise machine 100, said one or more text messages in the set second language on a display module 105 of the user interface 103 of the exercise machine 100 in the form of text messages or in the form of subtitles of the multimedia content CM, if the latter has a video component CM2 (video of the personal trainer PT).

Therefore, according to these embodiments, the at least one audio component CM1 in the set second language is broadcasted in audio mode and/or one or more text messages in the set second language in the form of text messages or in the form of subtitles of the multimedia content CM are displayed, if the latter has a video component CM2 (video of the personal trainer PT).

According to an embodiment, alternatively to the preceding ones, the at least one audio component CM1 is broadcasted in audio mode in the first language.

In this embodiment, shown with dashed lines in Figure 4, the step of providing 43 the user with the multimedia content CM with the associated translation in the set second language of the at least one audio component CM1 comprises a step of transforming 52 the translation CM1' in the set second language of the at least one audio component CM1 of the multimedia content CM into one or more text messages.

According to one embodiment, alternatively to the preceding one, shown with dashed lines in Figure 4, the step of providing 43 the user with the multimedia content CM with the associated translation in the set second language of the at least one audio component CM1 comprises steps of:
- transforming 53, by the data processing unit 101 of the exercise machine 100, the at least one audio component CM1 of the multimedia content CM in the first language, into one or more text messages;
- translating 54, by the data processing unit 101 of the exercise machine 100, said one or more text messages in the first language into said set second language.

Also in this case, as mentioned above, the translation may be directly carried out by the data processing unit 101 of the exercise machine 100 or transferred from the data processing unit 101 of the exercise machine 100 to a data processing module of a remote computer (remote electronic apparatus 200 or further remote electronic apparatus 400).

According to one embodiment, alternatively to the preceding one, shown with dashed lines in Figure 4, the step of providing 43 the user with the multimedia content CM with the associated translation in the set second language of the at least one audio component CM1 comprises a step of displaying 55, by the data processing unit 101 of the exercise machine 100, said one or more text messages in the set second language on a display module 105 of the user interface 103 of the exercise machine 100 in the form of text messages or in the form of subtitles of the multimedia content CM, if the latter has a video component CM2 (video of the personal trainer).

According to one embodiment, alternatively to or in combination with any one of the preceding ones, the broadcasting of the at least one audio component CM1 in audio mode occurs by means of an audio broadcasting module 106 of the user interface 103 of the exercise machine 100.

According to one embodiment, alternatively to or in combination with the preceding one, the broadcasting of the at least one audio component CM1 in audio mode occurs by means of a user's earphone operatively connected to the user interface 103 of the exercise machine 100.

Such a connection may be in wired mode, for example by means of inserting into the connection jack 107 of the user interface 103, or in wireless mode, for example by means of a communication channel in Bluetooth, NFC, Wi-Fi mode, or other equivalent technology.

According to a further embodiment, in combination with any one of the preceding ones, shown with dashed lines in the Figures, the method 40 further comprises a step of determining 56, by the data processing unit 101 of the exercise machine 100, said set second language associated with the user adapted to carry out a training session on the exercise machine 100.

According to one embodiment, in combination with the preceding one, said set second language is automatically determined by the data processing unit 101 of the exercise machine 100 according to set user requirements.

Certain modes for determining the set second language were described above.

According to a further embodiment, alternatively to the preceding one, said set second language is determined by the data processing unit 101 of the exercise machine 100 upon a manual request made by the user.

Certain manual request modes which can be made by the user were described above.

According to one embodiment, in combination with any one of those described above, the multimedia content CM is received in real time by the data processing unit 101 of the exercise machine 100.

In this embodiment, the method 40 is carried out in real time by the data processing unit 101 of the exercise machine 100.

According to an embodiment, alternatively to the preceding one, the multimedia content CM is received on demand by the data processing unit 101 of the exercise machine 100 upon a request by the user.

In this embodiment, the method 40 is carried out on demand by the data processing unit 101 of the exercise machine 100.

According to one embodiment, in combination with any one of the embodiments described above, shown with dashed lines in Figure 4, the method 40 further comprises a step of determining 57, by the data processing unit 101 of the exercise machine 100, in which language, between the first language and a plurality of second languages, also comprising the set second language, the at least one audio component CM1 of the multimedia content CM is to be broadcasted.

In this embodiment, the step of determining 57 is carried out by the data processing unit 101 of the exercise machine 100 upon a manual request by the user, imparted for example by means of a selection menu which can be displayed on the display module 105 of the user interface 103 of the exercise machine 100.

In an embodiment, in combination with the preceding one, the second set language may be changed by the user during the performance of the training session, for example by means of the selection menu which can be displayed on the display module 105 of the user interface 103 of the exercise machine 100.

Moreover, in an embodiment, in combination with any one of the preceding ones, shown with dashed lines in Figure 4, the method 40 further comprises a step of allowing 58 the user, by the data processing unit 101 of the exercise machine 100, the possibility of displaying or not displaying said one or more text messages in the set second language on a display module 105 of the user interface 103 of the exercise machine 100 in the form of text messages or in the form of subtitles of the multimedia content CM, if the latter has a video component CM2 (video of a personal trainer).

In this embodiment, the displaying or not displaying is carried out by the data processing unit 101 of the exercise machine 100 upon a manual request by the user, imparted for example by means of a selection menu which can be displayed on the display module 105 of the user interface 103 of the exercise machine 100.

According to one embodiment, in combination with any one of those described above, shown with dashed lines in Figure 4, the method 40 further comprises a step of selecting 59, by the user through a user interface 103 (described above) of the exercise machine 100, a multimedia content CM.

According to one embodiment, in combination with any one of those described above, shown with dashed lines in Figure 4, the method 40 further comprises a step of requesting 60, by the user through a user interface 103 (described above) of the exercise machine 100, a translation CM1' of the at least one audio component CM1 of the multimedia content CM in a set second language.

According to a further embodiment, in combination with any one of those described above, shown with dashed lines in Figure 4, the method 40 further comprises a step of verifying 61, by the data processing unit 101 of the exercise machine 100, whether the translation CM1' of the at least one audio component CM1 in a set second language is available or not in the storage unit operatively connected to the data processing unit 101 of the exercise machine 100.

With reference to an embodiment and the aforesaid Figure 1, an example is now described of the implementation, by an exercise machine 100, of a method of enjoying, on an exercise machine, a translation of a multimedia content in a set language.

A user gets on an exercise machine 100, e.g. a treadmill, to carry out physical activity at home, in a training class.

Once authenticated on the exercise machine 100, the data processing unit 101 of the exercise machine 100 loads the set user training program to be carried out in the training class.

A selection menu is displayed on the display module 105 of the user interface 103 of the exercise machine 100 which allows the user to select the set second language with which to enjoy a multimedia content CM (audio video of a personal trainer PT) which is made available for that training class.

The user, whose mother tongue is Italian, selects Italian as set second language.

The audio video CM of the personal trainer PT, remotely connected in a gym where the training session is carried out in a training class, is recorded by an electronic device 300 for acquiring a multimedia content 300 and broadcasted by a remote electronic apparatus 200 by means of a data communication network NTW.

The multimedia content CM comprises at least one audio component CM1, audio of the personal trainer PT, in a first language, e.g. English.

The exercise machine 100 receives the multimedia content CM and verifies if an Italian translation CM1' of the at least one audio component CM1 is available on a storage unit operatively connected to the exercise machine 100.

After verifying that translation CM1' of the at least one audio component CM1 of the multimedia content CM is not available in Italian, the exercise machine 100 transfers the translation CM1' to a data processing module 402 of a remote computer operatively connected to the exercise machine 100 by means of the data communication network NTW, for example a further remote electronic apparatus 400.

Once the translation is complete, a data processing module of the further remote electronic apparatus 400 provides the exercise machine 100 with the Italian translation CM1' of the at least one audio component CM1 of the multimedia content CM in real time.

The data processing unit 101 of the exercise machine 100 provides the user with the multimedia content CM (audio video of the personal trainer) with the associated Italian translation CM1' of the at least one audio component CM1 of the multimedia content CM.

In particular, given that the user selected Italian subtitles to be available, the data processing unit 101 of the exercise machine 100:
- extrapolates the at least one audio content CM1 from said received multimedia content CM;
- transforms the at least one audio component CM1 in Italian into one or more text messages;
- displays said one or more Italian text messages on a display module 105 of the user interface 103 of the exercise machine 100 in the form of subtitles to the multimedia content, considering that the multimedia content also has a video component CM2.

The user therefore enjoys the audio video of the personal trainer in original language (English) with the subtitles in Italian in real time when carrying out physical activity in the training class, thus succeeding in better understanding the commands and instructions provided by the personal trainer PT in order to carry out the training session more effectively and in a more performing manner.

As may be seen, the object of the invention is fully achieved.

Indeed, the method according to the present invention allows a user to have available, in real time, or on demand, in any case when enjoying of a multimedia content made available by a personal trainer, a translation into a language which can be understood by the user, as reliably and timely as possible, of a multimedia content which are enjoyable by the user on an exercise machine when carrying out a training session.

Moreover, the fact that the language in which the at least one audio component of the multimedia content is to be translated may be selected by the user by means of a menu displayed on a display module of the user interface of the exercise machine allows a simple and quick setting.

Again, the fact of being able to change the translation language also during the training session allows the user to try, for example, at the beginning, a language which differs from his/her own but, in a moment of difficulty, to be able to make use of a translation in his/her mother tongue in order to correctly continue the training session.

Those skilled in the art may make changes and adaptations to the embodiments of the method and exercise machine described above or can replace elements with others which are functionally equivalent to meet contingent needs without departing from the scope of the following claims. All the features described above as belonging to a possible embodiment may be implemented irrespective of the other embodiments described.

## Claims

1. A method (40) for enjoying, on an exercise machine (100), a translation of a multimedia content (CM) in a set language, comprising steps of:
- receiving (41), by a data processing unit (101) of an exercise machine (100), a multimedia content (CM) comprising at least one audio component (CM1) in a first language, the at least one audio component (CM1) comprising a first sub-component (CM1a) representative of the personal trainer's voice and a second sub-component (CM1b) representative of a background music, the transmission of the multimedia content occurring following a request to receive such multimedia content carried out by the data processing unit (101) of the exercise machine (100), said request being a consequence of a command imparted by the user to perform physical activity on the exercise machine (100) while following a set training program with the enjoyment of the multimedia content to follow the instructions of the personal trainer, in the step of receiving (41) the multimedia content (CM), the data processing unit (101) of the exercise machine (100) associates the first audio sub-component (CM1a) representative of the personal trainer's voice with a first audio channel and the second audio sub-component (CM1b) representative of the background music with the vocal part with a second audio channel, separate from the first audio channel;
- obtaining (42), by the data processing unit (101) of the exercise machine (100), a translation (CM1') of the first sub-component (CM1a) representative of the personal trainer's voice of the at least one audio component (CM1) in a set second language;
- providing (43) the user, by the data processing unit (101) of the exercise machine (100), by means of a user interface (103) operatively connected to the data processing unit (101) of the exercise machine (100), with the multimedia content (CM) with the associated translation (CM1') of the first sub-component (CM1a) representative of the personal trainer's voice of the at least one audio component (CM1) in the set second language.

2. A method (40) according to claim 1, wherein, if the translation of the at least one audio component (CM1) in a set second language is available on a storage unit (102; 202; 402) operatively connected to the data processing unit (101) of the exercise machine (100), the step of obtaining (42) comprises a step of using (44), by the data processing unit (101) of the exercise machine (100), the translation of the at least one audio component (CM1) in the set second language available on the storage unit (102; 202, 402) as a translation of the at least one audio component (CM1) in a set second language.

3. A method (40) according to any one of claims 1 and 2, wherein, if the translation of the at least one audio component (CM1) in a set second language is not available on the storage unit (102; 202; 402) operatively connected to the data processing unit (101) of the exercise machine (100), the step of obtaining (42) comprises a step of carrying out (45), by the data processing unit (101) of the exercise machine (100), the translation of the at least one audio component in the set second language.

4. A method (40) according to any one of the preceding claims from 2 to 3, wherein the storage unit (102) operatively connected to the data processing unit (101) of the exercise machine (100) is a local storage unit (102) of the exercise machine (100).

5. A method (40) according to any one of the preceding claims from 2 to 3, wherein the storage unit (202; 402) operatively connected to the data processing unit (101) of the exercise machine (100) is a storage module (202; 402) of a remote computer (200; 400) operatively connected to the exercise machine (100) by means of a data communication network (NTW).

6. A method (40) according to any one of the preceding claims from 3 to 5, wherein the step of carrying out (45), by the data processing unit (102) of the exercise machine (100), the translation (CM1') of the at least one audio component (CM1) in the set second language is carried out by the data processing unit (101) of the exercise machine (100).

7. A method (40) according to claim 5, wherein the step of carrying out (45), by the data processing unit (101) of the exercise machine (100), the translation (CM1') of the at least one audio component (CM1) in the set second language is transferred to a data processing module (201; 401) of the remote computer (200; 400), operatively connected to the exercise machine (100) by means of the data communication network (NTW).

8. A method (40) according to any one of the preceding claims, wherein the step of obtaining (42), by the data processing unit (101) of the exercise machine (100), the translation (CM1') of the at least one audio component (CM1) in an set second language comprises a step of extrapolating (46), by the data processing unit (101) of the exercise machine (100), the at least one audio content (CM1) from said received multimedia content (CM).

9. A method (40) according to any one of the preceding claims, wherein the step of providing (43) the user with the multimedia content (CM) with the associated translation (CM1') in the set second language of the at least one audio component (CM1) comprises a step of broadcasting (47) the at least one audio component (CM1) in audio mode.

10. A method (40) according to claim 9, wherein the at least one audio component (CM1) is broadcasted in audio mode as a translation (CM1') in the set second language.

11. A method (40) according to claim 10, wherein the step of providing (43) the user with the multimedia content (CM) with the associated translation (CM1') in the set second language of the at least one audio component (CM1) comprises a step of transforming (48), by the data processing unit (101) of the exercise machine (100), the translation (CM1') in the set second language of the at least one audio component (CM1) of the multimedia content into one or more text messages.

12. A method (40) according to claim 11, wherein the step of providing (43) the user with the multimedia content (CM) with the associated translation (CM1') in the set second language of the at least one audio component (CM1) comprises a step of displaying (51), by the data processing unit (101) of the exercise machine (100), said one or more text messages in the set second language on a display module (105) of the user interface (103) of the exercise machine (100) in the form of text messages or in the form of subtitles of the multimedia content (CM), if the latter has a video component (CM2).

13. A method (40) according to claim 9, wherein the at least one audio component (CM1) is broadcasted in audio mode in the first language.

14. A method (40) according to claim 13, wherein the step of providing (43) the user with the multimedia content (CM) with the associated translation (CM1') in the set second language of the at least one audio component (CM1) comprises a step of transforming (52) the translation (CM1') in the set second language of the at least one audio component (CM1) of the multimedia content (CM) into one or more text messages.

15. A method (40) according to claim 14, wherein the step of providing (43) the user with the multimedia content (CM) with the associated translation in the set second language of the at least one audio component (CM1) comprises a step of displaying (55), by the data processing unit (101) of the exercise machine (100), said one or more text messages in the set second language on a display module (105) of the user interface (103) of the exercise machine (100) in the form of text messages or in the form of subtitles of the multimedia content (CM), if the latter has a video component (CM2).

16. A method (40) according to any one of claims from 9 to 15, wherein the broadcasting of the at least one audio component (CM1) in audio mode occurs by means of an audio broadcasting module (106) of the user interface of the exercise machine or by means of a user's earphone operatively connected to the user interface (103) of the exercise machine (100).

17. A method (40) according to any one of the preceding claims, further comprising a step of determining (56), by the data processing unit (101) of the exercise machine (100), said set second language associated with the user adapted to carry out a training session on the exercise machine (100).

18. A method (40) according to claim 17, wherein said set second language is automatically determined by the data processing unit (101) of the exercise machine (100) as a function of set user requirements or is selected by the data processing unit (101) of the exercise machine (100) upon a manual request made by the user.

19. A method (40) according to any one of the preceding claims, comprising a step of determining (57), by the data processing unit (101) of the exercise machine (100), which language, between the first language and a plurality of second languages, also comprising the set second language, needs to be used to broadcast the at least one audio component (CM1) of the multimedia content (CM).

20. An exercise machine (100) comprising:
- a data processing unit (101);
- a user interface (103) operatively connected to the data processing unit (101),
the data processing unit (101) being configured to carry out the steps of the method (40) according to any one of the preceding claims.

## Patentansprüche

1. Verfahren (40) zum Nutzen einer Übersetzung eines Multimedia-Inhalts (CM) in einer eingestellten Sprache auf einem Trainingsgerät (100), das die Schritte umfasst:
- Empfangen (41) durch eine Datenverarbeitungseinheit (101) eines Trainingsgeräts (100) eines Multimedia-Inhalts (CM), der mindestens eine Audiokomponente (CM1) in einer ersten Sprache umfasst, wobei die mindestens eine Audiokomponente (CM1) eine erste Unterkomponente (CM1a), die die Stimme des Personal Trainers wiedergibt, und eine zweite Unterkomponente (CM1b), die Hintergrundmusik wiedergibt, umfasst, wobei die Übertragung des Multimedia-Inhalts nach einer Anforderung zum Empfangen dieses Multimedia-Inhalts erfolgt, die von der Datenverarbeitungseinheit (101) des Trainingsgeräts (100) durchgeführt wird, wobei die Anforderung eine Folge eines vom Benutzer erteilten Befehls ist, körperliche Aktivität auf dem Trainingsgerät (100) auszuüben, während ein eingestelltes Trainingsprogramm befolgt wird, wobei der Multimedia-Inhalt genutzt wird, um den Anweisungen des Personal Trainers zu folgen, wobei die Datenverarbeitungseinheit (101) des Trainingsgeräts (100) in dem Schritt des Empfangens (41) des Multimedia-Inhalts (CM) die erste Audio-Unterkomponente (CM1a), die die Stimme des Personal Trainers wiedergibt, einem ersten Audiokanal und die zweite Audio-Unterkomponente (CM1b), die die Hintergrundmusik mit dem Vokalanteil wiedergibt, einem zweiten Audiokanal, der von dem ersten Audiokanal getrennt ist, zuordnet;
- Erhalten (42) einer Übersetzung (CM1') der ersten Unterkomponente (CM1a), die die Stimme des Personal Trainers wiedergibt, der mindestens einen Audiokomponente (CM1) in einer eingestellten zweiten Sprache durch die Datenverarbeitungseinheit (101) des Trainingsgeräts (100);
- Bereitstellen (43) des Multimedia-Inhalts (CM) mit der zugehörigen Übersetzung (CM1') der ersten Unterkomponente (CM1a), die die Stimme des Personal Trainers wiedergibt, der mindestens einen Audiokomponente (CM1) in der eingestellten zweiten Sprache durch die Datenverarbeitungseinheit (101) des Trainingsgeräts (100) mittels einer Benutzerschnittstelle (103), die funktionsfähig mit der Datenverarbeitungseinheit (101) des Trainingsgeräts (100) verbunden ist, an den Benutzer.

2. Verfahren (40) nach Anspruch 1, wobei, falls die Übersetzung der mindestens einen Audiokomponente (CM1) in einer eingestellten zweiten Sprache auf einer Speichereinheit (102; 202; 402) verfügbar ist, die funktionsfähig mit der Datenverarbeitungseinheit (101) des Trainingsgeräts (100) verbunden ist, der Schritt des Erhaltens (42) einen Schritt des Verwendens (44) der Übersetzung der mindestens einen Audiokomponente (CM1) in der eingestellten zweiten Sprache, die auf der Speichereinheit (102; 202, 402) verfügbar ist, als Übersetzung der mindestens einen Audiokomponente (CM1) in einer eingestellten zweiten Sprache durch die Datenverarbeitungseinheit (101) des Trainingsgeräts (100) umfasst.

3. Verfahren (40) nach einem der Ansprüche 1 und 2, wobei, falls die Übersetzung der mindestens einen Audiokomponente (CM1) in einer eingestellten zweiten Sprache auf der Speichereinheit (102; 202; 402) nicht verfügbar ist, die funktionsfähig mit der Datenverarbeitungseinheit (101) des Trainingsgeräts (100) verbunden ist, der Schritt des Erhaltens (42) einen Schritt des Durchführens (45) der Übersetzung der mindestens einen Audiokomponente in die eingestellte zweite Sprache durch die Datenverarbeitungseinheit (101) des Trainingsgeräts (100) umfasst.

4. Verfahren (40) nach einem der vorhergehenden Ansprüche 2 bis 3, wobei die Speichereinheit (102), die funktionsfähig mit der Datenverarbeitungseinheit (101) des Trainingsgeräts (100) verbunden ist, eine lokale Speichereinheit (102) des Trainingsgeräts (100) ist.

5. Verfahren (40) nach einem der vorhergehenden Ansprüche 2 bis 3, wobei die Speichereinheit (202; 402), die funktionsfähig mit der Datenverarbeitungseinheit (101) des Trainingsgeräts (100) verbunden ist, ein Speichermodul (202; 402) eines Remote-Computers (200; 400) ist, der über ein Datenkommunikationsnetzwerk (NTW) funktionsfähig mit dem Trainingsgerät (100) verbunden ist.

6. Verfahren (40) nach einem der vorhergehenden Ansprüche 3 bis 5, wobei der Schritt des Durchführens (45) der Übersetzung (CM1') der mindestens einen Audiokomponente (CM1) durch die Datenverarbeitungseinheit (101) des Trainingsgeräts (100) in die eingestellte zweite Sprache von der Datenverarbeitungseinheit (101) des Trainingsgeräts (100) durchgeführt wird.

7. Verfahren (40) nach Anspruch 5, wobei der Schritt des Durchführens (45) der Übersetzung (CM1') der mindestens einen Audiokomponente (CM1) in die eingestellte zweite Sprache durch die Datenverarbeitungseinheit (101) des Trainingsgeräts (100) an ein Datenverarbeitungsmodul (201; 401) des Remote-Computers (200; 400) übertragen wird, das über das Datenkommunikationsnetzwerk (NTW) funktionsfähig mit dem Trainingsgerät (100) verbunden ist.

8. Verfahren (40) nach einem der vorhergehenden Ansprüche, wobei der Schritt des Erhaltens (42) der Übersetzung (CM1') der mindestens einen Audiokomponente (CM1) in einer eingestellten zweiten Sprache durch die Datenverarbeitungseinheit (101) des Trainingsgeräts (100) einen Schritt des Extrapolierens (46) des mindestens einen Audiokomponente (CM1) aus dem empfangenen Multimedia-Inhalt (CM) durch die Datenverarbeitungseinheit (101) des Trainingsgeräts (100) umfasst.

9. Verfahren (40) nach einem der vorhergehenden Ansprüche, wobei der Schritt des Bereitstellens (43) des Multimedia-Inhalts (CM) mit der zugehörigen Übersetzung (CM1') in der eingestellten zweiten Sprache der mindestens einen Audiokomponente (CM1) an den Benutzer einen Schritt des Ausstrahlens (47) der mindestens einen Audiokomponente (CM1) im Audiomodus umfasst.

10. Verfahren (40) nach Anspruch 9, wobei die mindestens eine Audiokomponente (CM1) im Audiomodus als Übersetzung (CM1') in der eingestellten zweiten Sprache ausgestrahlt wird.

11. Verfahren (40) nach Anspruch 10, wobei der Schritt des Bereitstellens (43) des Multimedia-Inhalts (CM) mit der zugehörigen Übersetzung (CM1') in der eingestellten zweiten Sprache der mindestens einen Audiokomponente (CM1) an den Benutzer einen Schritt des Umwandelns (48) der Übersetzung (CM1') in der eingestellten zweiten Sprache der mindestens einen Audiokomponente (CM1) des Multimedia-Inhalts in eine oder mehrere Textnachrichten durch die Datenverarbeitungseinheit (101) des Trainingsgeräts (100) umfasst.

12. Verfahren (40) nach Anspruch 11, wobei der Schritt des Bereitstellens (43) des Multimedia-Inhalts (CM) mit der zugehörigen Übersetzung (CM1') in der eingestellten zweiten Sprache der mindestens einen Audiokomponente (CM1) an den Benutzer einen Schritt des Anzeigens (51) der einen oder mehreren Textnachrichten in der eingestellten zweiten Sprache auf einem Anzeigemodul (105) der Benutzerschnittstelle (103) des Trainingsgeräts (100) in Form von Textnachrichten oder in Form von Untertiteln des Multimedia-Inhalts (CM), falls dieser eine Videokomponente (CM2) aufweist, durch die Datenverarbeitungseinheit (101) des Trainingsgeräts (100) umfasst.

13. Verfahren (40) nach Anspruch 9, wobei die mindestens eine Audiokomponente (CM1) im Audiomodus in der ersten Sprache ausgestrahlt wird.

14. Verfahren (40) nach Anspruch 13, wobei der Schritt des Bereitstellens (43) des Multimedia-Inhalts (CM) mit der zugehörigen Übersetzung (CM1') in der eingestellten zweiten Sprache der mindestens einen Audiokomponente (CM1) an den Benutzer einen Schritt des Umwandelns (52) der Übersetzung (CM1') in der eingestellten zweiten Sprache der mindestens einen Audiokomponente (CM1) des Multimedia-Inhalts (CM) in eine oder mehrere Textnachrichten umfasst.

15. Verfahren (40) nach Anspruch 14, wobei der Schritt des Bereitstellens (43) des Multimedia-Inhalts (CM) mit der zugehörigen Übersetzung in der eingestellten zweiten Sprache der mindestens einen Audiokomponente (CM1) an den Benutzer einen Schritt des Anzeigens (55) der einen oder mehreren Textnachrichten in der eingestellten zweiten Sprache auf einem Anzeigemodul (105) der Benutzerschnittstelle (103) des Trainingsgeräts (100) in Form von Textnachrichten oder in Form von Untertiteln des Multimedia-Inhalts (CM), falls dieser eine Videokomponente (CM2) aufweist, durch die Datenverarbeitungseinheit (101) des Trainingsgeräts (100) umfasst.

16. Verfahren (40) nach einem der Ansprüche 9 bis 15, wobei die Ausstrahlung der mindestens einen Audiokomponente (CM1) im Audiomodus mittels eines Audioausstrahlungsmoduls (106) der Benutzerschnittstelle des Trainingsgeräts oder mittels eines Kopfhörers des Benutzers erfolgt, der funktionsfähig mit der Benutzerschnittstelle (103) des Trainingsgeräts (100) verbunden ist.

17. Verfahren (40) nach einem der vorhergehenden Ansprüche, das ferner einen Schritt des Bestimmens (56) der eingestellten zweiten Sprache, die dem Benutzer zugeordnet ist, durch die Datenverarbeitungseinheit (101) des Trainingsgeräts (100) umfasst, die zum Durchführen einer Trainingseinheit auf dem Trainingsgerät (100) geeignet ist.

18. Verfahren (40) nach Anspruch 17, wobei die eingestellte zweite Sprache von der Datenverarbeitungseinheit (101) des Trainingsgeräts (100) automatisch in Abhängigkeit von eingestellten Benutzeranforderungen bestimmt wird oder von der Datenverarbeitungseinheit (101) des Trainingsgeräts (100) auf eine manuelle Anfrage des Benutzers hin ausgewählt wird.

19. Verfahren (40) nach einem der vorhergehenden Ansprüche, umfassend einen Schritt des Bestimmens (57) durch die Datenverarbeitungseinheit (101) des Trainingsgeräts (100), welche Sprache zwischen der ersten Sprache und einer Vielzahl von zweiten Sprachen, die auch die eingestellte zweite Sprache umfassen, verwendet werden muss, um die mindestens eine Audiokomponente (CM1) des Multimedia-Inhalts (CM) auszustrahlen.

20. Trainingsgerät (100), umfassend:
- eine Datenverarbeitungseinheit (101);
- eine Benutzerschnittstelle (103), die funktionsfähig mit der Datenverarbeitungseinheit (101) verbunden ist,
wobei die Datenverarbeitungseinheit (101) dazu konfiguriert ist, die Schritte des Verfahrens (40) nach einem der vorhergehenden Ansprüche auszuführen.

## Revendications

1. Procédé (40) pour profiter, sur une machine d'exercice (100), d'une traduction d'un contenu multimédia (CM) dans une langue définie, comprenant les étapes de :
- recevoir (41), par une unité de traitement de données (101) d'une machine d'exercice (100), un contenu multimédia (CM) comprenant au moins une composante audio (CM1) dans une première langue, l'au moins une composante audio (CM1) comprenant une première sous-composante (CM1a) représentative de la voix de l'entraîneur personnel et une deuxième sous-composante (CM1b) représentative d'une musique de fond, la transmission du contenu multimédia ayant lieu suite à une demande de réception d'un tel contenu multimédia effectuée par l'unité de traitement de données (101) de la machine d'exercice (100), ladite demande étant une conséquence d'un ordre donné par l'utilisateur d'effectuer une activité physique sur la machine d'exercice (100) tout en suivant un programme d'entraînement défini en profitant du contenu multimédia pour suivre les instructions de l'entraîneur personnel, à l'étape consistant à recevoir (41) le contenu multimédia (CM), l'unité de traitement de données (101) de la machine d'exercice (100) associe la première sous-composante audio (CM1a) représentative de la voix de l'entraîneur personnel à un premier canal audio et à la deuxième sous-composante audio (CM1b) représentative de la musique de fond avec la partie vocale avec un deuxième canal audio, distinct du premier canal audio ;
- obtenir (42), par l'unité de traitement de données (101) de la machine d'exercice (100), une traduction (CM1') de la première sous-composante (CM1a) représentative de la voix de l'entraîneur personnel de l'au moins une composante audio (CM1) dans une deuxième langue définie ;
- fournir (43) à l'utilisateur, par l'unité de traitement de données (101) de la machine d'exercice (100), au moyen d'une interface utilisateur (103) fonctionnellement reliée à l'unité de traitement de données (101) de la machine d'exercice (100), le contenu multimédia (CM) avec la traduction associée (CM1') de la première sous-composante (CM1a) représentatif de la voix de l'entraîneur personnel de l'au moins une composante audio (CM1) dans la deuxième langue définie.

2. Procédé (40) selon la revendication 1, dans lequel, si la traduction de l'au moins une composante audio (CM1) dans une deuxième langue définie est disponible sur une unité de stockage (102 ; 202 ; 402) fonctionnellement reliée à l'unité de traitement de données (101) de la machine d'exercice (100), l'étape consistant à obtenir (42) comprend une étape consistant à utiliser (44), par l'unité de traitement de données (101) de la machine d'exercice (100), la traduction de l'au moins une composante audio (CM1) dans la deuxième langue définie disponible sur l'unité de stockage (102 ; 202 ; 402) en tant que traduction de l'au moins une composante audio (CM1) dans une deuxième langue définie.

3. Procédé (40) selon l'une quelconque des revendications 1 et 2, dans lequel, si la traduction de l'au moins une composante audio (CM1) dans une deuxième langue définie n'est pas disponible sur l'unité de stockage (102 ; 202 ; 402) fonctionnellement reliée à l'unité de traitement de données (101) de la machine d'exercice (100), l'étape consistant à obtenir (42) comprend une étape consistant à effectuer (45), par l'unité de traitement de données (101) de la machine d'exercice (100), la traduction de l'au moins une composante audio dans la deuxième langue définie.

4. Procédé (40) selon l'une quelconque des revendications précédentes 2 à 3, dans lequel l'unité de stockage (102) fonctionnellement reliée à l'unité de traitement de données (101) de la machine d'exercice (100) est une unité de stockage locale (102) de la machine d'exercice (100).

5. Procédé (40) selon l'une quelconque des revendications précédentes 2 à 3, dans lequel l'unité de stockage (202 ; 402) fonctionnellement reliée à l'unité de traitement de données (101) de la machine d'exercice (100) est un module de stockage (202 ; 402) d'un ordinateur distant (200 ; 400) fonctionnellement relié à la machine d'exercice (100) au moyen d'un réseau de communication de données (NTW).

6. Procédé (40) selon l'une quelconque des revendications précédentes 3 à 5, dans lequel l'étape consistant à effectuer (45), par l'unité de traitement de données (101) de la machine d'exercice (100), la traduction (CM1') de l'au moins une composante audio (CM1) dans la deuxième langue définie est effectuée par l'unité de traitement de données (101) de la machine d'exercice (100).

7. Procédé (40) selon la revendication 5, dans lequel l'étape consistant à effectuer (45), par l'unité de traitement de données (101) de la machine d'exercice (100), la traduction (CM1') de l'au moins une composante audio (CM1) dans la deuxième langue définie est transférée à un module de traitement de données (201 ; 401) de l'ordinateur distant (200 ; 400), fonctionnellement relié à la machine d'exercice (100) au moyen du réseau de communication de données (NTW).

8. Procédé (40) selon l'une quelconque des revendications précédentes, dans lequel l'étape consistant à obtenir (42), par l'unité de traitement de données (101) de la machine d'exercice (100), la traduction (CM1') de l'au moins une composante audio (CM1) dans une deuxième langue définie comprend une étape consistant à extrapoler (46), par l'unité de traitement de données (101) de la machine d'exercice (100), au moins un contenu audio (CM1) dudit contenu multimédia (CM) reçu.

9. Procédé (40) selon l'une quelconque des revendications précédentes, dans lequel l'étape consistant à fournir (43) à l'utilisateur le contenu multimédia (CM) avec la traduction associée (CM1') dans la deuxième langue définie de l'au moins une composante audio (CM1) comprend une étape consistant à diffuser (47) l'au moins une composante audio (CM1) en mode audio.

10. Procédé (40) selon la revendication 9, dans lequel l'au moins une composante audio (CM1) est diffusée en mode audio en tant que traduction (CM1') dans la deuxième langue définie.

11. Procédé (40) selon la revendication 10, dans lequel l'étape consistant à fournir (43) à l'utilisateur le contenu multimédia (CM) avec la traduction associée (CM1') dans la deuxième langue définie de l'au moins une composante audio (CM1) comprend une étape consistant à transformer (48), par l'unité de traitement de données (101) de la machine d'exercice (100), la traduction (CM1') dans la deuxième langue définie de l'au moins une composante audio (CM1) du contenu multimédia en un ou plusieurs messages textuels.

12. Procédé (40) selon la revendication 11, dans lequel l'étape consistant à fournir (43) à l'utilisateur le contenu multimédia (CM) avec la traduction associée (CM1') dans la deuxième langue définie de l'au moins une composante audio (CM1) comprend une étape consistant à afficher (51), par l'unité de traitement de données (101) de la machine d'exercice (100), lesdits un ou plusieurs messages textuels dans la deuxième langue définie sur un module d'affichage (105) de l'interface utilisateur (103) de la machine d'exercice (100) sous la forme de messages textuels ou sous la forme de sous-titres du contenu multimédia (CM), si ce dernier a une composante vidéo (CM2).

13. Procédé (40) selon la revendication 9, dans lequel l'au moins une composante audio (CM1) est diffusé en mode audio dans la première langue.

14. Procédé (40) selon la revendication 13, dans lequel l'étape consistant à fournir (43) à l'utilisateur le contenu multimédia (CM) avec la traduction associée (CM1') dans la deuxième langue définie de l'au moins une composante audio (CM1) comprend une étape consistant à transformer (52) la traduction (CM1') dans la deuxième langue définie de l'au moins une composante audio (CM1) du contenu multimédia (CM) en un ou plusieurs messages textuels.

15. Procédé (40) selon la revendication 14, dans lequel l'étape consistant à fournir (43) à l'utilisateur le contenu multimédia (CM) avec la traduction associée dans la deuxième langue définie de l'au moins une composante audio (CM1) comprend une étape consistant à afficher (55), par l'unité de traitement de données (101) de la machine d'exercice (100), lesdits un ou plusieurs messages textuels dans la deuxième langue définie sur un module d'affichage (105) de l'interface utilisateur (103) de la machine d'exercice (100) sous la forme de messages textuels ou sous la forme de sous-titres du contenu multimédia (CM), si ce dernier a une composante vidéo (CM2).

16. Procédé (40) selon l'une quelconque des revendications 9 à 15, dans lequel la diffusion de l'au moins une composante audio (CM1) en mode audio se produit au moyen d'un module de diffusion audio (106) de l'interface utilisateur de la machine d'exercice ou au moyen d'un écouteur d'utilisateur fonctionnellement relié à l'interface utilisateur (103) de la machine d'exercice (100).

17. Procédé (40) selon l'une quelconque des revendications précédentes, comprenant en outre une étape consistant à déterminer (56), par l'unité de traitement de données (101) de la machine d'exercice (100), ladite deuxième langue définie associée à l'utilisateur adaptée pour effectuer une séance d'entraînement sur la machine d'exercice (100).

18. Procédé (40) selon la revendication 17, dans lequel ladite deuxième langue définie est automatiquement déterminée par l'unité de traitement de données (101) de la machine d'exercice (100) en fonction des exigences d'utilisateur définies ou est sélectionnée par l'unité de traitement de données (101) de la machine d'exercice (100) sur demande manuelle faite par l'utilisateur.

19. Procédé (40) selon l'une quelconque des revendications précédentes, comprenant une étape consistant à déterminer (57), par l'unité de traitement de données (101) de la machine d'exercice (100), quelle langue, entre la première langue et une pluralité de deuxièmes langues, comprenant également la deuxième langue définie, doit être utilisée pour diffuser l'au moins une composante audio (CM1) du contenu multimédia (CM).

20. Machine d'exercice (100) comprenant :
- une unité de traitement de données (101) ;
- une interface utilisateur (103) fonctionnellement reliée à l'unité de traitement de données (101),
l'unité de traitement de données (101) étant configurée pour exécuter les étapes du procédé (40) selon l'une quelconque des revendications précédentes.
